# EUROPÄISCHE PATENTSCHRIFT

(11) **EP 2 437 091 B1**
(45) Veröffentlichungstag und Bekanntmachung des Hinweises auf die Patenterteilung: **21.08.2013**
(21) Anmeldenummer: 10400050.0
(22) Anmeldetag: 01.10.2010
(51) Int. Cl.: G02B 6/44, B65H 55/04

(54) **Glasfaserspule mit einem selbsttragenden Wickel einer Glasfaserleitung und Verfahren zu deren Herstellung**
Optical fibre coil with a self-supporting coil of a fibre optic coil and method for producing same
Bobine de fibres de verre dotée d'un enroulement autoporteur d'une conduite en fibres de verre et son procédé de fabrication

(43) Veröffentlichungstag der Anmeldung: 04.04.2012
(73) Patentinhaber: ATLAS ELEKTRONIK GmbH, 28309 Bremen (DE)
(72) Erfinder: Bartholomäus, Ralf, 22880 Wedel (DE); Huckfeldt, Sönke, 25336 Elmshorn (DE)

(56) Entgegenhaltungen:
- WO-A1-2009/036897
- US-A- 4 746 080
- US-A- 5 193 761
- US-A- 5 209 416

## Beschreibung

Die Erfindung betrifft eine Glasfaserspule mit einem selbsttragenden Wickel einer Glasfaserleitung nach dem Oberbegriff von Anspruch 1 sowie ein Verfahren zu deren Herstellung nach dem Oberbegriff von Anspruch 6.

Gemäß WO2009/036897 A1 dient zwischen einem U-Boot und einem von dem U-Boot abgesetzten Fahrzeug, z.B. einem ziellaufenden Torpedo, eine Glasfaserleitung zur Übertragung von Daten und Informationen. Eine Glasfaserleitung ist vorteilhaft, da die Daten und Informationen über eine Distanz von mehreren Kilometern mit großer Bandbreite und möglichst geringer Dämpfung übertragen werden müssen. Vor dem Absetzen des Torpedos wird die Glasfaserleitung in Form einer Glasfaserspule im Torpedo sowie in einer sog. am U-Boot verbleibenden Kassette aufbewahrt.

Nach Absetzen des Torpedos werden im Betrieb der Glasfaserspule Daten und Informationen bereits durch die Glasfaserleitung übertragen, während sich die Glasfaserspule von innen nach außen abspult. Hierzu ist die Glasfaserspule in einer Kreuzwicklung gewickelt, um ein leichtes und sicheres Abspulen zu gewährleisten. Zur Herstellung der Glasfaserspule wird ein Wickeldorn benötigt, auf den die Glasfaserleitung aufgewickelt wird, wobei der Wickeldorn nach der Herstellung wieder entfernt wird. Nach dem Entfernen des Wickeldorns muss die Glasfaserspule selbsttragend ihre Form bewahren.

Herkömmlicherweise wird die fertig gewickelte Glasfaserspule mit in ihr belassenem Wickeldorn in ein Tauchbad getaucht, um nach Entfernen des Wickeldorns selbsttragend ihre Form zu bewahren. Das Tauchbad besteht aus einem gegenüber der Raumtemperatur erwärmten und danach verflüssigten Füll- bzw. Tränkstoff. Nach dem Tauchen der fertig gewickelten Glasfaserspule in das Tauchbad, wird die Glasfaserspule wieder aus dem Tauchbad entfernt und auf Raumtemperatur abgekühlt. Durch das Abkühlen der Glasfaserspule verfestigt sich der Füll- bzw. Tränkstoff in einen gelartigen Zustand. Ist der Kühlvorgang abgeschlossen, kann der Wickeldorn entfernt werden und die Glasfaserspule bewahrt selbsttragend ihre Form.

Hierbei entsteht das Problem, dass durch das Tauchbad eine gleichmäßige Tränkung der Glasfaserspule häufig nicht gegeben ist, da der Füll- bzw. Tränkstoff nur die äußeren Lagen der Glasfaserleitung der Glasfaserspule erreicht. Beim Entfernen des Wickeldorns aus der Glasfaserspule kommt es vor, dass einige Windungen nicht in ihrer durch die Kreuzwicklung vorgegebenen Position verbleiben und somit die Spule nicht vollständig ihre Form bewahrt.

Ferner weist die Glasfaserspule nach der Herstellung mit Kreuzwicklung Kreuzungen durch benachbarte, sich kreuzende Lagen der Glasfaserleitung auf. Nahe diesen Kreuzungen kommt es bei bekannten Kreuzwicklungen zu besonderen Biegestellen, den sog. Microbendings. Diese Microbendings entstehen, wenn die Lagen derart gewickelt werden, sodass eine mittlere Lage der Glasfaserleitung von einer darunterliegenden inneren Lage und von einer darüberliegenden äußeren Lage gekreuzt wird, wobei die äußere Lage parallel zu inneren Lage versetzt ist. Durch Zugkraft wird die mittlere Lage der Glasfaserleitung von gegenüberliegenden leicht versetzten Druckpunkten der äußeren und inneren Lagen in Kreuzungen der Glasfaserleitung übermäßig gebogen.

In Folge der Microbendings werden die optischen Eigenschaften der Glasfaserleitung negativ beeinflusst, sodass in der Glasfaserspule eine nachteilig hohe Dämpfung (durch Lichtverluste) entsteht. Die Daten bzw. Informationsübertragung, die auch bei aufgewickelter bzw. nur teilweise abgewickelter Glasfaserleitung einwandfrei gewährleistet sein muss, wird somit verschlechtert.

Ferner zeigt US 5,209,416 A einen selbsttragenden und aus dem Inneren abspulbaren Wickel einer Glasfaserspule sowie ein Verfahren zum Herstellen des Wickels. Der Wickel wird mit einer orthozyklischen Wicklung gewickelt, die sich dadurch auszeichnet, dass äußere Lagen der Glasfaserleitung jeweils in die Zwischenräume der Lagen greifen, die zu der jeweiligen äußeren Lage benachbart innenliegend liegen. Vorteilhaft an dieser orthozyklischen Wicklung ist eine dichte Wicklung mit einem hoher Füllfaktor, der zwar durch diese Wicklung Microbendings reduziert aber gleichzeitig erfordert, dass ein Klebstoff bzw. Füll- oder Tränkstoff auf jede Lage der Glasfaserleitung beim Wickeln einzeln aufgebracht werden muss, damit der Wickel auch ohne Wickeldorn selbsttragend seine Form bewahrt. Auch US 5,193,761 A und US 4,746,080 zeigen Glasfaserspulen mit orthozyklischer Wicklung.

Der Erfindung liegt daher die Aufgabe zugrunde, eine Glasfaserspule und ein Verfahren zu deren Herstellung aufzuzeigen, bei denen keine oder nur minimale Microbendings der Glasfaserleitung auftreten, sich die Glasfaserspule besonders leicht und sicher abspult und die Glasfaserspule gleichzeitig nach Entfernen des Wickeldorns selbsttragend ihre Form bewahrt.

Die Erfindung löst dieses Problem durch die Merkmale einer Glasfaserspule mit einem selbsttragenden Wickel einer Glasfaserleitung gemäß Anspruch 1 sowie einem Verfahren zu deren Herstellung gemäß Anspruch 6.

Die erfindungsgemäße Glasfaserspule sowie das erfindungsgemäße Verfahren zu deren Herstellung werden erfindungsgemäß derart ausgelegt, sodass die Glasfaserspule keine oder minimale Microbendings der Glasfaserleitung aufweist und gleichzeitig nach Entfernen des Wickeldorns selbsttragend ihre Form bewahrt.

Dazu betrifft die Erfindung eine Glasfaserspule mit einem selbsttragenden Wickel einer Glasfaserleitung. Der Wickel der Glasfaserleitung ist als Kreuzwicklung ausgebildet, wobei die Kreuzwicklung mehrere übereinanderliegende Lagen der Glasfaserleitung sowie Kreuzungen der Glasfaserleitung benachbarter Lagen aufweist. D.h. jede der Lagen der Glasfaserleitung wird von mindestens einer benachbarten Lage der Glasfaserleitung in Kreuzungen gekreuzt, da benachbarte Lagen der Glasfaserleitung gemäß der Kreuzwicklung abwechselnd positive und negative Steigungen, wie z.B. links- und rechtsgängige Helices, also zylindrischen Spiralen, aufweisen.

Jede der Kreuzungen weist eine Kreuzungsfläche auf. Eine Kreuzungsfläche entspricht der Fläche die durch orthogonale Parallelprojektion der sich kreuzenden Abschnitte der Glasfaserleitung auf eine Projektionsebene entstehen. Die Projektionsebene der jeweiligen Kreuzung wird durch zwei, jeweils zu einem der sich kreuzenden Abschnitte der Glasfaserleitung parallele Vektoren in der Mitte zwischen den jeweiligen Abschnitten der Glasfaserleitung aufgespannt. Ferner weist jede Kreuzungsfläche einen geometrischen Schwerpunkt auf.

Erfindungsgemäß weist der Wickel der Glasfaserleitung zumindest in einem in Spulenlängsrichtung betrachteten, mittleren Bereich eine innere Lage von inneren Kreuzungen auf. Der mittlere Bereich des Wickels ist als ein Bereich zu verstehen, in dem die Lagen der Glasfaserleitung keine Wendepunkte aufweisen. Die Spulenlängsrichtung ist als die Richtung entlang einer Spulenlängsachse zu betrachten, wobei die Spulenlängsachse als geometrisches Hilfsmittel anzusehen ist und die Glasfaserspule nach der Herstellung keine Spulenlängsachse im Sinne eines Spulenkerns oder Wickeldorns aufweist. Die innere Lage von inneren Kreuzungen wird durch Kreuzungen gebildet, deren geometrische Schwerpunkte der Kreuzungsflächen vergleichbar große Abstände zur Spulenlängsachse haben. Die inneren Kreuzungen liegen also exemplarisch auf einer Zylindermantelfläche, deren Zylinderachse die Spulenlängsachse bildet. Zudem weist die innere Lage von inneren Kreuzungen eine definierte Anzahl von Kreuzungen auf.

Ferner weist der Wickel im mittleren Bereich über der inneren Lage von inneren Kreuzungen äußere Lagen von äußeren Kreuzungen auf. Jede der äußeren Lagen von äußeren Kreuzungen liegt weiter von der Spulenlängsachse aus entfernt als die inneren Kreuzungen der inneren Lage von inneren Kreuzungen. Wie oben können die Kreuzungen einer Lage von äußeren Kreuzungen ebenfalls als auf einer Zylindermantelfläche liegend betrachtet werden. Hierbei weisen die Zylinder der Zylindermantelflächen je nach Lage der Kreuzungen unterschiedliche Radien auf. Die Anzahl von Kreuzungen der inneren Lage und die jeweilige Anzahl von Kreuzungen der äußeren Lagen sind gleich groß. Die Anzahl der Kreuzungen für eine innere Lage von inneren Kreuzungen ist also festgelegt und jede der äußeren Lagen von äußeren Kreuzungen weist jeweils die gleiche Anzahl von Kreuzungen auf, wie die innere Lage von inneren Kreuzungen.

Erfindungsgemäß sind die äußeren Kreuzungen derart ausgerichtet oder angeordnet, sodass der geometrische Schwerpunkt von jeder der Kreuzungsflächen der äußeren Kreuzungen von einer radial zur Spulenlängsachse verlaufenden Geraden geschnitten wird, die durch die Kreuzungsfläche einer unter der jeweiligen äußeren Kreuzung liegenden Kreuzung tritt. Eine unter der jeweiligen äußeren Kreuzung liegende Kreuzung ist die Kreuzung, die weiter in Richtung der Spulenlängsachse, also innenseitig der jeweiligen äußeren Kreuzung liegt. Jede Kreuzung einer äußeren Lage ist dazu genau einer Kreuzung einer benachbarten unteren, also innenseitig bzw. auf einer benachbarten Zylindermantelfläche eines Zylinders mit geringerem Durchmesser liegenden, Lage zugeordnet.

Es werden demnach Paare gebildet, die jeweils aus zwei Kreuzungen, nämlich einer äußeren Kreuzung und der unter der äußeren Kreuzung liegende Kreuzung, bestehen. Die Kreuzungen jedes Paares sind in bestimmter Weise zueinander ausgerichtet. Dazu wird jedem Paar von Kreuzungen eine radial zur Spulenlängsachse verlaufende Gerade zugeordnet. Diese Gerade eines Paares von Kreuzungen schneidet zunächst den geometrischen Schwerpunkt der Kreuzungsfläche der äußeren Kreuzung eines Paares. Ferner ist die äußere Kreuzung derart über der anderen Kreuzung des Paares, die in Richtung Spulenlängsachse unter der äußeren Kreuzung liegt, angeordnet, sodass die dem Paar zugeordnete Gerade ebenfalls durch die Kreuzungsfläche der in Richtung Spulenlängsachse unter, also innenseitig, der jeweiligen äußeren Kreuzung liegenden Kreuzung tritt.

Ferner betrifft die Erfindung ein Verfahren zur Herstellung der erfindungsgemäßen Glasfaserspule. Hierzu wird der Wickel aus einer Glasfaserleitung als Kreuzwicklung, z.B. auf einen Wickeldorn, aufgewickelt. Beim Aufwickeln mit einer Kreuzwicklung entstehen übereinanderliegende Lagen der Glasfaserleitung, die sich in Kreuzungen der Glasfaserleitung in benachbarten Lagen kreuzen. Die durch das Aufwickeln in Kreuzwicklung erzeugten Kreuzungen weisen Kreuzungsflächen mit je einem geometrischen Schwerpunkt auf. Ferner wird bei der Herstellung des Wickels zumindest in einem, in Spulenlängsrichtung betrachtet, mittleren Bereich eine innere Lage von inneren Kreuzungen und darüber mehrere äußere Lagen von äußeren Kreuzungen durch Wicklung gebildet, sodass die Anzahl von Kreuzungen der inneren Lage und die jeweilige Anzahl von Kreuzungen der äußeren Lagen gleich groß sind.

Dies kann z.B. erreicht werden, indem ein Führungsarm beim Wickeln der Glasfaserleitung die Glasfaserleitung beim Wickeln zumindest jeder zweiten Lage mit einem gleichen Bewegungsablauf, z.B. bezüglich seiner Geschwindigkeit und/oder Beschleunigung, parallel zur Wickelachse bewegt, während sich der Wickeldorn um die eigene Achse mit konstanter Geschwindigkeit dreht. Erfindungsgemäß werden die Kreuzungen der Glasfaserleitung durch eine weitestgehend gleichmäßigen Bewegungsablauf des Führungsarms beim Wickeln mindestens jeder zweiten Lage derart gewickelt, sodass die äußeren Kreuzungen derart angeordnet werden, dass der geometrischen Schwerpunkt von jeder der Kreuzungsflächen der äußeren Kreuzungen von einer radial zur Spulenlängsachse verlaufenden Geraden geschnitten wird, die durch die Kreuzungsfläche einer unter der jeweiligen äußeren Kreuzung liegenden Kreuzung tritt.

Es sind verschieden Bewegungsabläufe des Führungsarms sowie Drehgeschwindigkeiten der Achse möglich. Wichtig ist, dass eine festgelegte Abhängigkeit der Drehgeschwindigkeit des Wickeldorns von der Bewegung des Führungsarms zur erfindungsgemäßen Wicklung führt.

Vorteil dieser Glasfaserspule, sowie des Herstellungsverfahrens dieser Glasfaserspule ist, dass sich Öffnungen zwischen jeweils vier benachbarten, rautenförmig angeordneten Kreuzungen einer Lage von Kreuzungen bilden. Erfindungsgemäß liegen diese Öffnungen in jeder Lage vom Inneren zum Äußeren der Glasfaserspule derart übereinander, sodass sich Kanäle bilden, die eine gleichmäßige Tränkung über alle Lagen der Glasfaserspule mit einem Füll- oder Tränkstoff ermöglichen. Der Tränkstoff hat die Aufgabe die einzelnen Lagen der Glasfaserleitung aneinander zu fixieren, wodurch die Glasfaserspule selbsttragend ihre Form bewahrt.

Ein weiterer Vorteil ist, dass der Druck der Kreuzungen einer Lage von Kreuzungen durch die erfindungsgemäße Anordnung der Kreuzungen nur auf die Kreuzungsflächen der darunterliegenden, benachbarten Lage von Kreuzungen ausgeübt wird. Dadurch treten keine oder nur minimale Microbendings der Glasfaserleitung auf.

Nach einer weiteren vorteilhaften Ausbildung der Glasfaserspule weist jede der Kreuzungen eine Berührungsfläche innerhalb der Kreuzungsfläche der jeweiligen Kreuzung auf. Die Berührungsfläche entspricht den durch Parallelprojektion auf die Kreuzungsfläche einer Kreuzung projizierten Berührungspunkten zweier benachbarter Lagen der Glasfaserleitung, die sich in der Kreuzung berühren. Wie zuvor wird der geometrische Schwerpunkt von jeder der äußeren Kreuzungsflächen von einer radial zur Spulenachse verlaufenden Geraden geschnitten, wobei die Gerade nun durch die Kreuzungsfläche einer unter der jeweiligen äußeren Kreuzung liegenden Kreuzung innerhalb der Berührungsfläche tritt.

Zur Herstellung der Glasfaserspule wird auch gemäß einer weiteren Ausbildung des erfindungsgemäßen Herstellungsverfahrens die Glasfaserleitung auf einen Wickeldorn aufgewickelt, sodass jede der Kreuzungen eine Berührungsfläche innerhalb der Kreuzungsfläche der jeweiligen Kreuzung aufweist. Die Glasfaserleitung wird derart gewickelt, sodass der geometrische Schwerpunkt von jeder der Kreuzungsflächen der äußeren Kreuzungen von einer radial zur Spulenlängsachse verlaufenden Geraden geschnitten wird und die Gerade nun durch die Kreuzungsfläche einer unter der jeweiligen äußeren Kreuzung liegenden Kreuzung innerhalb der Berührungsfläche tritt.

Wieder werden Paare aus jeweils zwei Kreuzungen gebildet, denen jeweils eine radial zur Spulenlängsachse verlaufende Gerade zugeordnet wird. Die Gerade schneidet wiederum den geometrischen Schwerpunkt von der Kreuzungsfläche der äußeren Kreuzung eines Paares, verläuft jedoch nun durch die Berührungsfläche der unter der jeweiligen äußeren Kreuzung liegenden Kreuzung. Die Berührungsfläche umfasst einen Ausschnitt der Kreuzungsfläche.

Vorteil der dadurch erreichten Anordnung der äußeren Kreuzungen über den Berührungsflächen der jeweils darunterliegenden Kreuzung ist, dass sich die Kanäle der Öffnungen noch gradliniger vom Äußeren zum Inneren der Glasfaserspule ausbilden. Somit wird eine vergleichsweise noch bessere Tränkung über alle Lagen der Glasfaserspule ermöglicht. Ebenfalls werden Microbendings der Glasfaserleitung noch weiter vermindert.

Nach einer weiteren vorteilhaften Ausbildung wird der geometrische Schwerpunkt von jeder der äußeren Kreuzungsflächen von einer radial zur Spulenachse verlaufenden Geraden geschnitten, wobei die Gerade nun durch die Kreuzungsfläche einer unter der jeweiligen äußeren Kreuzung liegenden Kreuzung im geometrischen Schwerpunkt tritt. D.h. die Geraden durch die geometrischen Schwerpunkte von jeder Kreuzung einer äußeren Lage von äußeren Kreuzungen verlaufen jeweils fluchtend, also in einer Flucht, zu der Geraden durch den geometrischen Schwerpunkt einer Kreuzung der unter der jeweils äußeren Lage von äußeren Kreuzungen liegenden Lage von Kreuzungen.

Vorteil einer derartigen Anordnung der geometrischen Schwerpunkte der äußeren Kreuzungen über den geometrischen Schwerpunkten darunterliegender Kreuzungen ist, dass sich die Kanäle der Öffnungen bestmöglich gradlinig vom Äußeren zum Inneren der Glasfaserspule ausbilden. Somit wird eine vergleichsweise bestmögliche Tränkung über alle Lagen der Glasfaserspule ermöglicht. Ebenfalls werden Microbendings der Glasfaserleitung bestmöglich vermindert.

Gemäß einer weiteren vorteilhaften Ausbildung weist jede Lage der Glasfaserleitungen Windungen auf. Windung bedeutet in diesem Zusammenhang, dass die Glasfaserleitung um einen gedachten Zylindermantel gewickelt ist, wobei der Start- und Endpunkt der Windung auf einer Geraden parallel zur Spulenlängsachse auf dem Zylindermantel liegen. Innerhalb jeder Windung der Glasfaserleitung ist die Glasfaserleitung in sich selber gedreht. D.h. vom Startpunkt bis zum Endpunkt jeder Windung der Glasfaserleitung wird die Glasfaserleitung um eine Längsachse durch den Glasfaserleitungsmittelpunkt um 360 Grad gedreht. Die Richtung, in der die Glasfaserleitung in sich selbst gedreht, also verdrallt, ist, wird von einer Blickrichtung vom später abzuspulenden Ende der Glasfaserleitung aus entlang ihrer Längsachse als Drehung der Glasfaserleitung um ihre Längsachse aus dieser Blickrichtung definiert. Dabei ist die Richtung, in welche die Glasfaserleitung in sich selbst gedreht (verdrallt) ist, abhängig von der Abziehrichtung, d.h. der bezüglich der Glasfaserspule axialen Richtung, in welche die Glasfaserspule abgespult werden soll. Ferner ist die Richtung, in welche die Glasfaserleitung in sich selbst gedreht ist, davon abhängig, ob die Glasfaserleitung für ein Abspulen in rechts- oder linksdrehender Richtung vorgesehen ist, wobei dieses Abspulen entgegen der Abziehrichtung betrachtet wird. Die Glasfaserleitung ist also in der gleichen Richtung in sich selbst gedreht (verdrallt), wie sich die Glasfaserleitung - entgegen der Abziehrichtung betrachtet - abspulen wird.

Vorteilhafterweise wird bereits bei der Herstellung der Glasfaserspule die Glasfaserleitung beim Wickeln innerhalb jeder der Windungen in sich selber gedreht.

Vorteilhaft an dieser Drehung der Glasfaserleitung in sich selbst ist, dass die Glasfaserspule drallfrei ist und dass dadurch beim Abwickeln der Glasfaserleitung keine Schlaufen entstehen.

Gemäß einer weiteren vorteilhaften Weiterbildung des erfindungsgemäßen Herstellungsverfahrens wird die Glasfaserleitung beim Wickeln einer Zugkraft ausgesetzt. Diese Zugkraft wird beginnend von der ersten oder inneren Lage über jede weitere darüberliegende oder außenseitig liegende Lage der Glasfaserleitung reduziert und während des Wickelns einer Lage konstant gehalten.

Durch ein Verringern der Zugkraft vom Inneren zum Äußeren beim Wickeln der Lagen der Glasfaserspule wird verhindert, dass wegen des steigenden Durchmessers der Glasfaserspule vom Inneren zum Äußeren ein höherer Druck der äußeren Lagen auf die Inneren Lagen ausgeübt wird wodurch die Glasfaserspule nach Entfernen des Wickeldorns in sich zusammen fallen würde.

Gemäß der erfindungsgemäßen Glasfaserspule sind die übereinanderliegenden benachbarten Lagen der Glasfaserleitung mit einem Füll- oder Tränkstoff aneinander fixiert.

Ferner werden die übereinanderliegenden benachbarten Lagen der Glasfaserleitung mit einem Füll- oder Tränkstoff bei der Herstellung vor Entfernen des Wickeldorns fixiert.

Durch eine Fixierung der benachbarten Lagen der Glasfaserleitung mit einem Füll- oder Tränkstoff kann die Form der Glasfaserspule sicher bewahrt werden. Vorteilhafterweise liegt die Phasenumwandlungstemperatur des Füll- oder Tränkstoffs oberhalb der maximalen Betriebstemperatur der Glasfaserspule, wobei die Betriebstemperatur üblicherweise 0 bis 40 Grad beträgt. D.h. der Füll- oder Tränkstoff befindet sich oberhalb der Betriebstemperatur der Glasfaserspule in einem flüssigen Zustand und unterhalb der maximalen Betriebstemperatur der Glasfaserspule in einem gelartigen bzw. festen Zustand.

Hieraus ergibt sich der Vorteil, dass die Glasfaserspule im gesamten Temperaturbereich der Betriebstemperatur ihre Form bewahrt, da der Füll- oder Tränkstoff sich in diesem Temperaturbereich nicht verflüssigt.

Ferner ist es vorteilhaft, dass der Füll- oder Tränkstoff Vaseline, ein Wachs oder Wachsgel, eine Mischung aus Vaseline und hochschmelzenden Wachsen, eine Mischung aus Weißöl und Wachs oder eine Mischung aus Rizinusöl und Kalziumseife ist.

Vorteilhaft ist, dass diese Füll- oder Tränkstoffe auf Kohlenwasserstoffbasis gebildet sind und die Eigenschaften, dass sie chemisch inert und durch Erwärmung verflüssigbar, lösungsmittelfrei, gesundheitlich unbedenklich, nicht im Salzwasser löslich und umweltverträglich sind. Zudem liegt die Phasenumwandlungstemperatur all dieser Stoffe, bei der die Phase oder der Aggregatzustand sich ändert, oberhalb der normalen Betriebstemperatur.

Gemäß einer weiteren vorteilhaften Weiterbildung des Verfahrens zur Herstellung der Glasfaserspule, wird die Tränkung des Wickels mit dem Füll- oder Tränkstoff im Vakuum oder in einem Tauchbad durchgeführt.

Daraus ergibt sich der Vorteil, dass keine Lufteinschlüsse entstehen und der Tränkstoff dadurch in alle Lagen gleichmäßig verteilt wird, wodurch eine gleichmäßige Tränkung gewährleistet wird.

Gemäß einer weiteren vorteilhaften Weiterbildung des Verfahrens wird der Tränkungsgrad des Wickels anhand der Gewichtsmessung des abtropfenden Wickels bestimmt.

Vorteilhafterweise kann so genau die Menge an Füll- oder Tränkstoff bestimmt werden, um im Betrieb ein sicheres Abspulen der Glasfaserspule zu gewährleisten.

Weitere vorteilhafte Ausführungsformen ergeben sich aus den Unteransprüchen sowie aus den anhand der beigefügten Zeichnung näher erläuterten Ausführungsbeispielen. In der Zeichnung zeigen:
- Fig. 1: eine erste Lage einer rechtsgängig gewickelten Glasfaserleitung einer Glasfaserspule gemäß einem Ausführungsbeispiel der Erfindung;
- Fig. 2: die erste Lage der Glasfaserleitung aus Fig. 1 sowie eine zweite Lage der Glasfaserleitung die linksgängig gewickelt ist;
- Fig. 3: eine Glasfaserspule bestehend aus einem in mehreren Lagen gemäß der Fig. 1 bzw. 2 gewickelten Wickel der Glasfaserleitung;
- Fig. 4: eine Kreuzung zweier Abschnitte der Glasfaserleitung gemäß Fig.2 oder 3 und deren Kreuzungs- sowie deren Berührungsfläche;
- Fig. 5: einen Ausschnitt einer Schnittebene der Glasfaserspule gemäß Fig. 3 mit mehreren Lagen der Glasfaserleitung sowie deren Kreuzungsflächen;
- Fig. 6: einen Ausschnitt einer Schnittebene einer Glasfaserspule gemäß einem weiteren Ausführungsbeispiel der Erfindung sowie Berührungsflächen der Glasfaserleitungen;
- Fig. 7: Öffnungen, die sich zwischen vier rautenförmig angeordneten, benachbarten Kreuzungen der Glasfaserleitung ergeben;
- Fig. 8: eine schematische Darstellung übereinanderliegender Öffnungen mehrerer Lagen der Glasfaserleitung, die einen Kanal formen und
- Fig. 9: eine Kreuzung zweier Lagen einer Glasfaserleitung, die durch einen Füll- bzw. Tränkstoff aneinander fixiert sind.

Im Folgenden wird eine Glasfaserspule mit einem selbsttragenden Wickel einer Glasfaserleitung gemäß einem Ausführungsbeispiel der Erfindung beschrieben, wobei der Wickel als Kreuzwicklung ausgebildet ist und die Kreuzwicklung mehrere übereinanderliegende Lagen der Glasfaserleitung sowie Kreuzungen von je zwei Abschnitten der Glasfaserleitung benachbarter Lagen aufweist. Die Kreuzungen definieren jeweils Kreuzungsflächen, die durch parallele Projektion der zwei Abschnitte der Glasfaserleitung einer Kreuzung auf eine Bildebene zwischen den Abschnitten der Glasfaserleitung derselben Kreuzung entsteht. Ferner weist jede der Kreuzungsflächen einer geometrischen Schwerpunkt auf und zumindest in einem in Spulenlängsrichtung betrachteten, mittleren Bereich des Wickels sind die denselben benachbarten Lagen zugeordneten Kreuzungsflächen jeweils auf einer Zylindermantelfläche angeordnet. Die Kreuzungsflächen sind zumindest in dem mittleren Bereich auf zwei benachbarten Zylindermantelflächen derart angeordnet, dass jeweils zur Paarbildung einer Kreuzungsfläche einer der beiden Zylindermantelflächen eine Kreuzungsfläche der jeweils anderen Zylindermantelfläche mit minimalem Abstand zugeordnet ist. Der geometrische Schwerpunkt einer der beiden Kreuzungsflächen eines derart gebildeten Paares wird von einer radial zur Spullängsachse verlaufenden Geraden geschnitten, die durch die andere Kreuzungsfläche desselben Paares hindurch tritt.

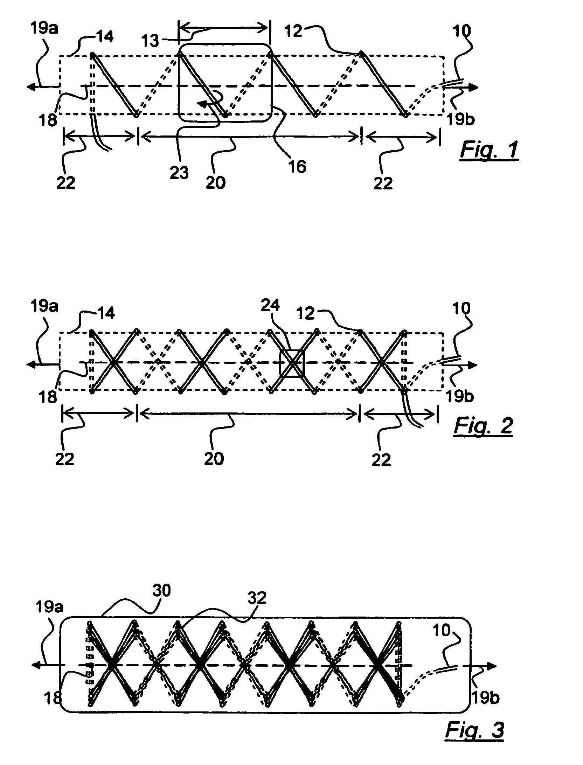

Fig. 1 zeigt die Glasfaserleitung 10, die in einer ersten Lage 12 mit einer definierten Steigung 13 um eine erste Zylindermantelfläche 14 gewickelt ist. Ferner weist die erste Lage 12 Windungen 16 auf. Eine Windung 16 definiert den Abschnitt der Glasfaserleitung, der genau einmal um die Zylindermantelfläche 14 gewickelt ist. Die Steigung 13 ist hier analog zu der Definition der Steigung 13 einer Helix zu verstehen, bei der sich eine Schraubenlinie um eine Zylindermantelfläche 14 mit einer konstanten Steigung 13 windet. Die Steigung 13 beschreibt den Abstand zwischen zwei Punkten einer Windung 16, die auf einer parallel zu einer Spulenlängsachse 18 verlaufenden Geraden auf der Zylindermantelfläche 14 liegen. Bei der Helix führt eine positive bzw. negative Steigung 13 dazu, dass eine Helix links- oder rechtsgängig ist. In der Fig.1 kann die erste Lage 12 analog dazu als rechtsgängig betrachtet werden, wobei die Steigung 13 im Gegensatz zur Helix nicht innerhalb der Windungen 16 konstant gehalten werden muss. Zur besseren Übersicht wird exemplarisch eine hohe konstante Steigung 13 der ersten Lage 12 dargestellt. Ferner weisen die Windungen 16 der Glasfaserleitung 10 im oberen sowie im unteren Bereich der Zylindermantelfläche 14 nur in der zeichnerischen Darstellung gemäß den Figuren Knicke, also unstetige Steigungen 13 innerhalb der Windungen 16, der Glasfaserleitung 10 auf, wobei jedoch die Windungen 16 der Glasfaserleitung 10 einer realen Wicklung eine stetige Steigung zur Vermeidung von Knickstellen aufweisen.

Die Lage 12 der Glasfaserleitung 10 liegt auf der ersten Zylindermantelfläche 14 und hat in jedem Punkt den gleichen Abstand zu der Spulenlängsachse 18. Die erste Zylindermantelfläche 14, sowie die Spulenlängsachse sind hier exemplarisch dargestellt. Die erste Zylindermantelfläche 14 kann jedoch als Wickeldorn betrachtet werden, um den die Lagen 12 der Glasfaserleitung 10 bei der Herstellung gewickelt werden, wobei der Wickeldorn nach der Herstellung wieder entfernt wird, damit die Glasfaserleitung 10 aus dem Inneren der Glasfaserspule in eine linksseitige axiale Abziehrichtung 19a oder eine rechtsseitige axiale Abziehrichtung 19b abgezogen bzw. abgespult werden kann. Zudem wird bei der Herstellung die erste Lage 12 einer konstanten Zugkraft ausgesetzt. Die erste Lage 12 der Glasfaserleitung weist einen mittleren Bereich 20, der in Richtung der Spulenlängsachse 18 betrachtet wird, sowie links- und rechtsseitig des mittleren Bereichs 20 zwei Randbereiche 22 auf.

Ferner ist die Glasfaserleitung 10 innerhalb jeder Windung 16 einmal um die eigene Achse, also bezüglich einer Längsache durch den Glasfaserleitungsmittelpunkt, um 360 Grad gedreht. Diese Drehung in sich selbst wird als Drall oder Verdrallung bezeichnet. Die Richtung, in der die Glasfaserleitung 10 in sich selbst gedreht, also verdrallt, ist, wird definiert als die Drehung der Glasfaserleitung 10 um ihre Längsachse aus einer Blickrichtung betrachtet vom später abzuspulenden Ende der Glasfaserleitung 10 entlang deren Längsachse. Diese Drehung in sich selbst (Verdrallung) ist schematisch durch einen Pfeil 23 dargestellt. Die Richtung, in der die Glasfaserleitung 10 innerhalb einer Windung 16 in sich selbst, also um die eigene Achse, gedreht ist, ist davon abhängig, ob die Glasfaserleitung 10 in die linke axiale Abziehrichtung 19a oder die rechte axiale Abziehrichtung 19b abgespult werden soll und ob die Glasfaserleitung 10 entgegen der Abziehrichtung 19a, 19b betrachtet in rechts- oder linksdrehender Richtung, also im Uhrzeigersinn oder entgegen dem Uhrzeigersinn, abzuspulen ist. Die Glasfaserleitung 10 ist mit der gleichen Richtung in sich selbst gedreht, wie die Glasfaserleitung 10 - entgegen der Abziehrichtung 19a, 19b betrachtet - abzuspulen ist. Die Glasfaserleitung 10 wird bei der Herstellung immer so in sich selbst gedreht, dass beim späteren Abspulen der Glasfaserspule die Glasfaserspule drallfrei ist, so dass Schleifen in der Glasfaserleitung auch bei einer gekrümmten Ausbringung der Glasfaserleitung vermieden werden.

Fig. 2 zeigt die erste Lage 12 der Glasfaserleitung 10 aus Fig. 1 und eine weitere über der ersten Lage 12 liegende zweite Lage 12 der Glasfaserleitung 10. Die zweite Lage 12 der Glasfaserleitung 10 ist linksgängig über die erste Lage 12 gewickelt. Zumindest im mittleren Bereich 20 weisen die erste Lage 12 der Glasfaserleitung 10 durch rechtsgängige und die zweite Lage 12 der Glasfaserleitung 10 durch linksgängige Wicklung Kreuzungen 24 der Glasfaserleitung 10 auf. Wie im vorliegenden Beispiel treten auch Kreuzungen 24 in den Randbereichen 22 auf.

Die zweite Lage 12 der Glasfaserleitung 10 kann betrachtet werden, als wäre sie auf eine zweite Zylindermantelfläche 14 gewickelt, wobei die zweite Zylindermantelfläche 14 die erste Zylindermantelfläche 14 umschließt. Bezogen auf die Spulenlängsachse 18 weist der Zylinder der zweiten Zylindermantelfläche 14 einen größeren Radius auf als der Zylinder der ersten Zylindermantelfläche 14. Die erste und die zweite Zylindermantelfläche 14 können als benachbarte Zylindermantelflächen 14 betrachtet werden. Weitere Lagen 12 der Glasfaserleitung 10 liegen dann entsprechend auf weiteren Zylindermantelflächen 14, wobei der Radius jedes Zylinders der entsprechenden Zylindermantelfläche 14 mit jeder weiteren gewickelten Lage zunimmt.

Auch die zweite Lage 12 der Glasfaserleitung 10 wird mit einer konstanten Zugkraft bei der Herstellung der Glasfaserspule, wie bereits die erste Lage der Glasfaserleitung 10 gewickelt. Die Zugkraft, mit der diese zweite Lage 12 der Glasfaserleitung 10 gewickelt wird, ist hierbei geringer als die Zugkraft mit der die erste Lage 12 der Glasfaserleitung 10 in Fig. 1 gewickelt wird.

Fig. 3 zeigt eine Glasfaserspule 30, bestehend aus einer Vielzahl von Lagen 12 der Glasfaserleitung 10, die in Windungen 16 zu einem selbsttragenden Wickel 32 aufgewickelt sind. Auch hier ist die Glasfaserspule 30 nur in vereinfachter Form dargestellt. Eine reale Glasfaserspule 30 weist in der Regel eine geringere Steigung 13 der Windungen 16 auf und besteht aus mehr als den dargestellten Lagen 12. Es ist zu erkennen, dass die Kreuzungen 24 der Glasfaserleitung 10 jeder der Lagen 12 im Bereich von Normalen zur gedachten Spulenlängsachse 18 weitestgehend übereinanderliegen.

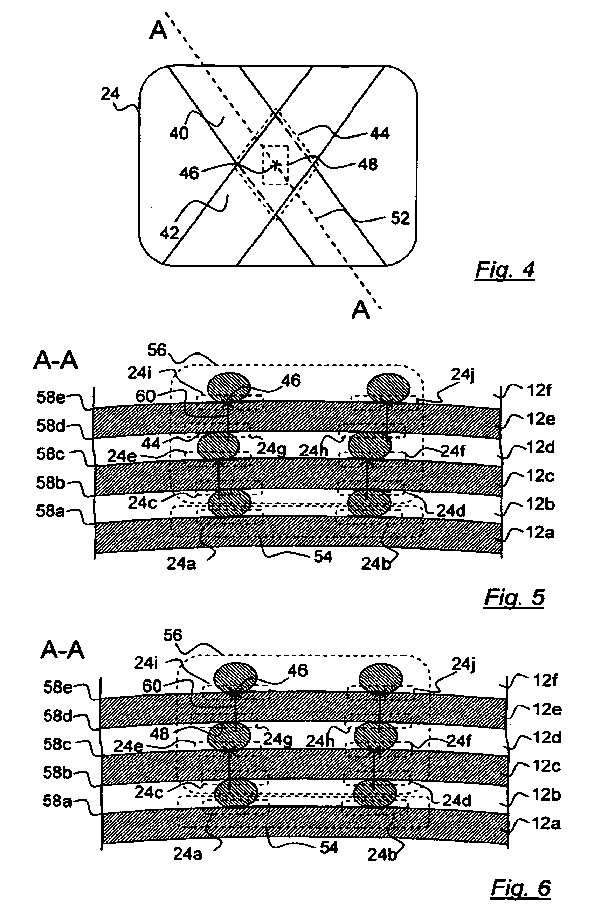

Fig. 4 zeigt einen ersten Abschnitt 40 der Glasfaserleitung 10 sowie einen zweiten Abschnitt 42 der Glasfaserleitung 10 zweier benachbarter Lagen 12 der Glasfaserleitung 10, die sich in einer Kreuzung 24 kreuzen. Die Kreuzung 24 weist eine Kreuzungsfläche 44 auf. Die Kreuzungsfläche 44 der Kreuzung 24 entspricht der Fläche, die durch orthogonale Parallelprojektion der sich kreuzenden ersten und zweiten Abschnitte 40, 42 der Glasfaserleitung 10 im Bereich der Kreuzung 24 entsteht. D.h. betrachtet man eine Kreuzung 24, sodass man senkrecht auf die Zylindermantelfläche 14 blickt, so entspricht die Kreuzungsfläche 44 dem Bereich der zweidimensional gesehen von beiden Abschnitten 40, 42 durchlaufen wird. Die Kreuzungsfläche 44 der Kreuzung 24 weist zudem einen geometrischen Schwerpunkt 46 auf.

Ferner ist eine Berührungsfläche 48 der beiden Abschnitte 40, 42 der Glasfaserleitung 10 dargestellt. Die Berührungsfläche 48 entspricht der Fläche in die sich die beiden Abschnitte 40, 42 der Glasfaserleitung 10 innerhalb der Kreuzungsfläche 44 berühren. Die Berührungsfläche 48 ist exemplarisch als Rechteck eingezeichnet, wobei jedoch auch andere Formen der Berührungsfläche möglich sind. Diese Formen der Berührungsfläche sind abhängig von der Zug- bzw. Druckkraft, die die beiden Abschnitte 40, 42 benachbarter Lagen 12 der Glasfaserleitung 10 aufeinander ausüben. Ferner ist die Form der Berührungsfläche 48 von den Steigungen 13 der Windungen 16 abhängig, in denen die beiden Abschnitte 40, 42 der benachbarten Lagen 12 der Glasfaserleitung 10 sich kreuzen. Neben weiteren Faktoren ist die Flächengröße der Berührungsfläche 48 auch von der Querschnittsform der Glasfaserleitung 10 sowie von der Verformbarkeit der Glasfaserleitung 10 abhängig. Außerdem ist eine Schnittlinie 52 zu erkennen, wobei die Schnittebene in Fig. 5 und 6 erläutert wird.

Fig. 5 zeigt die durch die Schnittlinie 52 in Fig. 4 dargestellte Schnittebene durch die Glasfaserspule 30. Allerdings besteht der dargestellte Ausschnitt der Schnittebene aus mehreren Windungen 16 und mehreren Lagen 12 der Glasfaserleitung 10 als der Ausschnitt in Fig. 4. Die Lage 12a entspricht der ersten Lage 12 Glasfaserleitung 10 aus Fig. 1 und die zweite Lage 12b entspricht der zweiten Lage 12 aus Fig. 2. Zudem zeigt Fig. 5 eine dritte Lage 12c, eine vierte Lage 12d, die fünfte Lage 12e und eine sechste Lage 12f. Zwischen den einzelnen Lagen 12a bis 12f weist die Kreuzwicklung der Glasfaserleitung 10 innere Lagen von inneren Kreuzungen 24a, 24b in einem ersten Bereich 54 sowie äußere Lagen von äußeren Kreuzungen 24c bis 24j, in einem zweiten Bereich 56 auf.

Jede der Kreuzungen 24 weist einen geometrischen Schwerpunkt 46 auf, der zur besseren Übersicht nur für die Kreuzungen 24e, 24f zwischen der dritten Lage 12c und der vierten Lage 12d der Glasfaserleitung 10 sowie für die Kreuzungen 24i, 24j zwischen der fünften Lage 12e und der sechsten Lage 12f der Glasfaserleitung 10 dargestellt ist. Ferner werden die Querschnitte der Kreuzungsflächen 44 in den Kreuzungen 24a bis 24j aufgezeigt. Es werden Lagen von Kreuzungen 58a bis 58e definiert, wobei alle Kreuzungen 24 innerhalb einer der Lagen von Kreuzungen 58a bis 58e zwischen den gleichen benachbarten Lagen 12 der Glasfaserleitung 10 liegen. Jede unterschiedliche Lage von Kreuzungen 58a bis 58e entspricht also Zylindermantelflächen 14 deren Zylindern unterschiedliche Radien aufweisen. Ferner ist zwischen einer inneren Lagen von inneren Kreuzungen 58a zwischen der ersten Lage 12a und der zweiten Lage 12b der Glasfaserleitung 10, sowie zwischen äußeren Lagen von äußeren Kreuzungen 58b bis 58e, die jeweils zwischen den übrigen benachbarten Lagen 12 der Glasfaserleitung 10 liegen, die nicht die innere Lagen von inneren Kreuzungen 58a bildet, zu unterscheiden. Die Anzahl von Kreuzungen der innerer Lage von inneren Kreuzungen 58a und die jeweilige Anzahl von Kreuzungen 24 der äußeren Lagen von äußeren Kreuzungen 58b bis 58e ist gleich groß.

Erfindungsgemäß ist nun jede der äußeren Kreuzungen 24c bis 24j der äußeren Lagen von äußere Kreuzungen 56 in bestimmter Weise angeordnet. Zur besseren Übersicht wird dies Anordnung in Fig. 5 für die Kreuzungen 24e, 24f zwischen der dritten Lage 12c und der vierten Lage 12d der Glasfaserleitung 10 sowie für die Kreuzungen 24i, 24j zwischen der fünften Lage 12e und der sechsten Lage 12f der Glasfaserleitung 10 dargestellt.

Exemplarisch wird die Anordnung der äußeren Kreuzungen 24c bis 24j im Folgenden für die linke Kreuzung 24i zwischen der fünften Lage 12e und der sechsten Lage 12f der Glasfaserleitung 10 beschrieben. Diese äußere Kreuzung 24i weist einen geometrischen Schwerpunkt 46 der Kreuzungsfläche 44 auf. Der Schwerpunkt 46 der äußeren Kreuzung 24i wird von einer radial zur Spulenlängsachse verlaufenden Geraden 60 geschnitten. Ferner ist diese äußere Kreuzung 24i über der unter der äußeren Kreuzung 24i liegenden, nämlich der links zwischen der vierten Lage 12d und der fünften Lage 12e der Glasfaserleitung 10 dargestellten, Kreuzung 24g angeordnet, sodass die Gerade 60, die den geometrischen Schwerpunkt 46 der Kreuzung 24i schneidet, ebenfalls durch die Kreuzungsfläche 44 der unter der äußeren Lage liegenden äußeren Kreuzung 24i liegende Kreuzung 24g verläuft.

Fig. 6 zeigt eine der Fig. 5 entsprechende Ansicht eines weiteren Ausführungsbeispiels, wobei gleiche Bezugszeichen gleiche Merkmale bezeichnen. Der Unterschied besteht darin, dass anstatt der Querschnitte der Kreuzungsflächen 44 die Querschnitte der Berührungsflächen 48 dargestellt sind und darin dass die Kreuzungen 24a bis 24j gemäß einer weiteren vorteilhaften Weiterbildung der Erfindung angeordnet sind.

Wie zuvor wird jeder der äußeren Kreuzungen 24c bis 24j in ihrem geometrischen Schwerpunkt 46 von einer radial zur Spulenlängsachse 18 verlaufenden Geraden 60 geschnitten. Allerdings ist nun jede der äußeren Kreuzungen 24c bis 24j derart über der jeweils unter der äußeren Kreuzung 24c bis 24j liegenden Kreuzung 24a bis 24h angeordnet, sodass jede der radial zur Spulenlängsachse verlaufenden Geraden 60 eine der äußeren Kreuzungen 24c bis 24j im geometrischen Schwerpunkt 46 und gleichzeitig die jeweils unter der äußeren Kreuzung 24c bis 24j liegende Kreuzung 24a bis 24h in ihrer Berührungsfläche durchtritt.

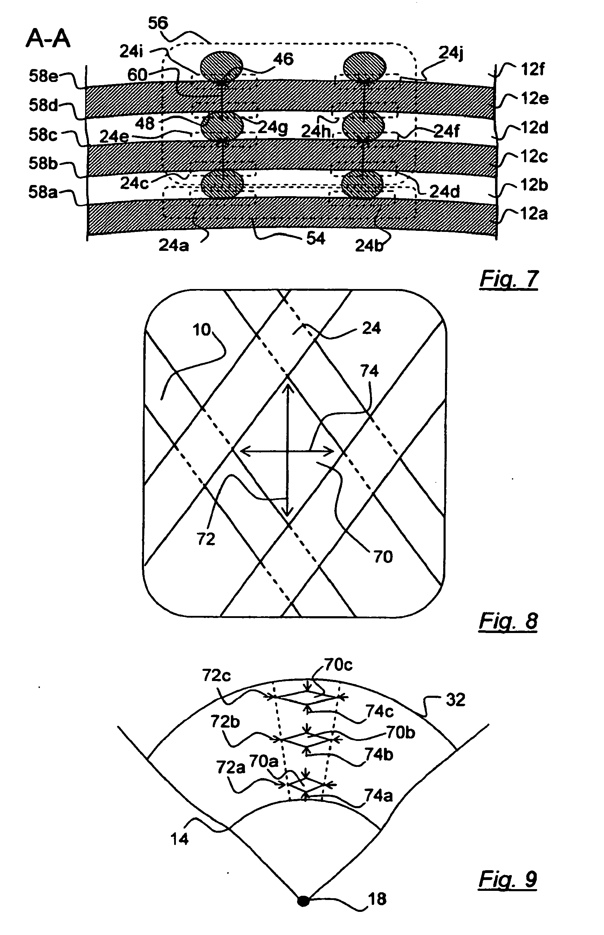

Fig. 7 zeigt eine den Fig. 5 und 6 entsprechende Ansicht eines weiteren Ausführungsbeispiels, wobei gleiche Bezugszeichen gleiche Merkmale bezeichnen. Der Unterschied besteht darin, dass die Querschnitte der Kreuzungsflächen 44 und die Querschnitte der Berührungsflächen 48 nicht mehr dargestellt sind und darin, dass die Kreuzungen 24a bis 24j gemäß einer weiteren vorteilhaften Weiterbildung der Erfindung angeordnet sind.

Wie zuvor wird jeder der äußeren Kreuzungen 24c bis 24j in ihrem geometrischen Schwerpunkt 46 von einer radial zur Spulenlängsachse 18 verlaufenden Geraden 60 geschnitten. Allerdings ist nun jede der äußeren Kreuzungen 24c bis 24j derart über der jeweils unter der äußeren Kreuzung 24c bis 24j liegenden Kreuzung 24a bis 24h angeordnet, dass jede der radial zur Spulenlängsachse verlaufenden Geraden 60 eine der äußeren Kreuzungen 24c bis 24j im geometrischen Schwerpunkt 46 und gleichzeitig die jeweils unter der äußeren Kreuzung 24c bis 24j liegende Kreuzung 24a bis 24h in ihrem Schwerpunkt 46 durchtritt. Somit verläuft jede der Geraden 60 einer äußeren Lage von äußeren Kreuzungen 58b bis 58e jeweils genau in der Flucht einer der Geraden 60 einer der unter der äußeren Lage von äußeren Kreuzungen 58b bis 58e liegenden Kreuzungen 24a bis 24h.

Fig. 8 zeigt vier rautenförmig zueinander angeordnete, benachbarte Kreuzungen 24 einer der Lagen von Kreuzungen 58a bis 58e. Zwischen den vier Kreuzungen 24 der Glasfaserleitung ist eine Öffnung 70 dargestellt. D.h. jede der dargestellten Kreuzungen 24 bildet einen Eckpunkt der Öffnung 70, wodurch die Öffnung 70 eine parallelogrammähnliche bzw. rautenförmige Öffnungsfläche aufweist. Die Öffnung 70 weist zwischen jeweils zwei gegenüberliegenden der vier Kreuzungen 24 einen erste diagonale Öffnungsweite 72 sowie einen zweite diagonale Öffnungsweite 74 auf. Der erste diagonale Öffnungsweite 72 wird dabei zwischen gegenüberliegenden Kreuzungen 24 einer Lage von Kreuzungen 58a bis 58e als die Länge einer Geraden zwischen den gegenüberliegenden Kreuzung definiert, die parallel zu einer Senkrechten durch die Spulenlängsachse 18 verläuft. Der zweite diagonale Öffnungsweite 74 entspricht der Länge einer Geraden zwischen den gegenüberliegenden Kreuzungen 24 einer Lage von Kreuzungen 58a bis 58e, die parallel zur Spulenlängsachse 18 verläuft.

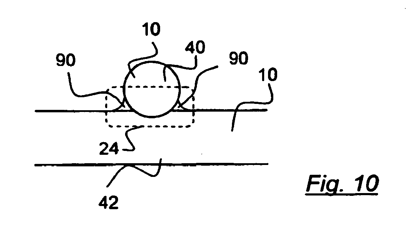

Fig. 9 zeigt die Glasfaserspule 30 im Querschnitt durch die Spulenlängsachse 18. Schematisch sind drei übereinanderliegende Öffnungen 70a bis 70c von übereinanderliegenden Öffnungen 70 übereinanderliegender Lagen von Kreuzungen 60, 62 dargestellt. Es ist zu erkennen, dass zweiten diagonalen Öffnungsweiten 74a bis 74c der Öffnungen 70a bis 70c über alle Lagen eine konstant Länge aufweisen. Hingegen weisen die ersten diagonalen Öffnungsweiten 72a bis 72c der Öffnungen 70a bis 70c unterschiedliche Abstände, abhängig von der Entfernung der Lage von Kreuzungen 58a bis 58e von der Spulenlängsachse 18, auf. Die erste diagonale Öffnungsweite 72 vergrößert sich, umso weiter die Öffnung 70 einer Lage von Kreuzungen 58a bis 58e von der Spulenlängsachse 18 radial entfernt angeordnet ist. Fig. 10 zeigt eine Kreuzung 24 zweier Abschnitte 40, 42 einer Glasfaserleitung 10, die durch einen Füll- oder Tränkstoff 90 aneinander fixiert, d.h. verklebt, sind. Vorzugsweise weist der Füll- oder Tränkstoff 90 eine Phasenumwandlungstemperatur auf, die oberhalb der maximalen Betriebstemperatur der Glasfaserspule 30 liegt.

Bei der Herstellung des Wickels 32 der Glasfaserspule 30 wird der Wickel 32, nachdem er auf einen Wickeldorn gemäß oben beschriebener Weise gewickelt wurde, in ein Tauchbad mit erwärmtem Tränk- bzw. Füllstoff 90 eingetaucht. Der Tränk- bzw. Füllstoff 90 dringt durch die Kanäle, die sich durch übereinanderliegende Öffnungen 70 bei erfindungsgemäßer Anordnung der Kreuzungen 24 ergeben und verteilt sich im Wickel 32. Die Tränkung kann auch im Vakuum mit einem Vakuumtränkverfahren durchgeführt werden. Es wird eine Menge des Tränk- bzw. Füllstoffs bestimmt, die eine Fixierung der Lagen 12 der Glasfaserleitung 10 aneinander gewährleistet, um im Betrieb ein sicheres Abspulen der Glasfaserspule 30 zu gewährleisten.

Ferner wird der Tränkungsgrad des Wickels 32 bestimmt, indem die Glasfaserspule 30 aus dem Tränkbad entfernt wird und das Gewicht der Glasfaserspule 30 nach dem Entfernen kontinuierlich gemessen wird. Beträgt das Gewicht der Glasfaserspule 30 einen definierten Wert, so wird das Abtropfen des Tränk- bzw. Füllstoffs 90 unterbrochen, sodass das Gewicht der Glasfaserspule 30 bis zum vollständigen Abkühlen des Tränk- bzw. Füllstoffs 90 weitestgehend konstant gehalten wird. Ein vorteilhafter Füll- oder Tränkstoff 90 zum Fixieren der Lagen 12 der Glasfaserleitung 10 sind z.B. Vaseline, ein Wachs oder Wachsgel, eine Mischung aus Vaseline und hochschmelzenden Wachsen, eine Mischung aus Weißöl und Wachs oder eine Mischung aus Rizinusöl und Kalziumseife.

Nach dem Abkühlen des Wickels 32 der Glasfaserspule 30 wird der Wickeldorn entfernt und die Glasfaserspule 30 bewahrt selbsttragend ihre Form. Vorzugsweise dient die Glasfaserspule 30 zur Übertragung von Daten und Informationen zwischen einem U-Boot und einem von dem U-Boot abgesetzten Fahrzeug, z.B. einem ziellaufenden Torpedo.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Vielmehr sind alle Merkmalskombinationen als offenbart zu betrachten.

## Patentansprüche

1. Glasfaserspule (30) mit einem selbsttragenden Wickel (32) einer Glasfaserleitung (10), wobei der Wickel (32) als Kreuzwicklung ausgebildet ist und die Kreuzwicklung mehrere übereinanderliegende Lagen (12) der Glasfaserleitung (10) sowie Kreuzungen (24) der Glasfaserleitung (10) benachbarter Lagen (12) aufweist, wobei die Kreuzungen (24) jeweils Kreuzungsflächen (44) mit je einem geometrischen Schwerpunkt (46) aufweisen und übereinanderliegende Lagen (12) der Glasfaserleitung (10) mit einem Füll- oder Tränkstoff (90) aneinander fixiert sind,
**dadurch gekennzeichnet, dass**
der Wickel (32) zumindest in einem, in Spulenlängsrichtung betrachtet, mittleren Bereich (20) eine innere Lage von inneren Kreuzungen (58a) und darüber mehrere äußere Lagen von äußeren Kreuzungen (58b bis 58e) aufweist, wobei die Anzahl von Kreuzungen (24) der inneren Lage (58a) und die jeweilige Anzahl von Kreuzungen (24) der äußeren Lagen (58b bis 58e) gleich groß sind, Öffnungen (70) zwischen jeweils vier benachbarten, rautenförmig angeordneten Kreuzungen (24) einer Lage von Kreuzungen (58a bis 58e) ausgebildet sind, wobei die Öffnungen (70) vom Inneren zum Äußeren der Glasfaserspule (30) derart übereinanderliegen, so dass sich Kanäle bilden, und der geometrischen Schwerpunkt (46) von jeder der Kreuzungsflächen (44) der äußeren Kreuzungen (24c bis 24i) von einer radial zur Spulenlängsachse (18) verlaufenden Geraden (60) geschnitten wird, die durch die Kreuzungsfläche (44) einer unter der jeweiligen äußeren Kreuzung (24c bis 24i) liegenden Kreuzung (24) tritt.

2. Glasfaserspule nach Anspruch 1,
**dadurch gekennzeichnet, dass**
jede der Kreuzungen (24) eine Berührungsfläche (48) innerhalb der Kreuzungsfläche (44) der jeweiligen Kreuzung (24) aufweist und der geometrischen Schwerpunkt (46) von jeder der Kreuzungsflächen (44) der äußeren Kreuzungen (24c bis 24i) von einer radial zur Spulenlängsachse (18) verlaufenden Geraden (60) geschnitten wird, die durch die Kreuzungsfläche (44) einer unter der jeweiligen äußeren Kreuzung (24c bis 24i) liegenden Kreuzung (24) innerhalb der Berührungsfläche (48) tritt.

3. Glasfaserspule nach Anspruch 1 oder 2,
**dadurch gekennzeichnet, dass**
jede Lage (12) der Glasfaserleitung (10) Windungen (16) aufweist und die Glasfaserleitung (10) innerhalb jeder der Windungen (16) in sich selber gedreht ist.

4. Glasfaserspule nach einem der vorherigen Ansprüche,
**dadurch gekennzeichnet, dass**
der Füll- oder Tränkstoff (90) eine Phasenumwandlungstemperatur aufweist, die oberhalb der maximalen Betriebstemperatur der Glasfaserspule (30) liegt.

5. Glasfaserspule nach einem der vorherigen Ansprüche,
**dadurch gekennzeichnet, dass**
der Füll- oder Tränkstoff (30) Vaseline, ein Wachs oder Wachsgel, eine Mischung aus Vaseline und hochschmelzenden Wachsen, eine Mischung aus Weißöl und Wachs oder eine Mischung aus Rizinusöl und Kalziumseife ist.

6. Verfahren zur Herstellung Glasfaserspule (30) mit einem selbstragenden Wickel (32) einer Glasfaserleitung (10), wobei der Wickel (32) als Kreuzwicklung aufgewickelt wird, sodass der Wickel (32) aus mehrere übereinanderliegende Lagen (12) der Glasfaserleitung (10) gebildet wird und dadurch Kreuzungen (24) der Glasfaserleitung (10) benachbarter Lagen (12) erzeugt werden, wobei die Kreuzungen (24) jeweils Kreuzungsflächen (44) mit je einem geometrischen Schwerpunkt (46) aufweisen und übereinanderliegende Lagen (12) der Glasfaserleitung (10) mit einem Füll- oder Tränkstoff (90) aneinander fixiert werden,
**dadurch gekennzeichnet, dass**
der Wickel (32) zumindest in einem, in Spulenlängsrichtung betrachtet, mittleren Bereich (20) eine innere Lage von inneren Kreuzungen (58a) und darüber mehrere äußere Lagen von äußeren Kreuzungen (58b bis 58e) gebildet werden, sodass die Anzahl von Kreuzungen (24) der inneren Lage (58a) und die jeweilige Anzahl von Kreuzungen (24) der äußeren Lagen (58b bis 58e) gleich groß sind, sich Öffnungen (70) zwischen jeweils vier benachbarten, rautenförmig angeordneten Kreuzungen (24) einer Lage von Kreuzungen (58a bis 58e) bilden, wobei die Öffnungen (70) vom Inneren zum Äußeren der Glasfaserspule (30) derart übereinanderliegen, so dass sich Kanäle bilden, und der geometrischen Schwerpunkt (46) von jeder der Kreuzungsflächen (44) der äußeren Kreuzungen (24c bis 24i) von einer radial zur Spulenlängsachse verlaufenden Geraden (60) geschnitten wird, die durch die Kreuzungsfläche (44) einer unter der jeweiligen äußeren Kreuzung (24c bis 24i) liegenden Kreuzung (24) tritt.

7. Verfahren nach Anspruch 6,
**dadurch gekennzeichnet, dass**
die Lagen (12) der Glasfaserleitung (10) derart angeordnet werden, sodass jede der Kreuzungen (24) eine Berührungsfläche (48) innerhalb der Kreuzungsfläche (44) der jeweiligen Kreuzung (24) aufweist und der geometrischen Schwerpunkt (46) von jeder der Kreuzungsflächen (44) der äußeren Kreuzungen (24c bis 24i) von einer radial zur Spulenlängsachse verlaufenden Geraden (60) geschnitten wird, die durch die Kreuzungsfläche (44) einer unter der jeweiligen äußeren Kreuzung (24c bis 24i) liegenden Kreuzung (24) innerhalb der Berührungsfläche (48) tritt.

8. Verfahren nach Anspruch 6 oder 7,
**dadurch gekennzeichnet, dass**
jede Lage (12) durch Windungen (16) gewickelt wird und die Glasfaserleitung (10) beim Wickeln innerhalb jeder der Windung (16) in sich selber gedreht wird.

9. Verfahren nach einem der Ansprüche 6 bis 8,
**dadurch gekennzeichnet, dass**
die Glasfaserleitung (10) beim Wickeln einer Zugkraft ausgesetzt wird und dass die Zugkraft beginnend von der ersten Lage (12) über jede weitere darüberliegende Lage (12) der Glasfaserleitung (10) reduziert wird und die Zugkraft während des Wickelns einer Lage (10) konstant gehalten wird.

10. Verfahren nach einem der Ansprüche 6 bis 9,
**dadurch gekennzeichnet, dass**
der Füll- oder Tränkstoff (90) eine Phasenumwandlungstemperatur aufweist, die oberhalb der maximalen Betriebstemperatur der Glasfaserspule liegt.

11. Verfahren nach einem der Ansprüche 6 bis 10,
**dadurch gekennzeichnet, dass**
die Tränkung des Wickels (32) im Vakuum oder im Tauchbad durchgeführt wird.

12. Verfahren nach einem der Ansprüche 6 bis 11,
**dadurch gekennzeichnet, dass**
der Tränkungsgrad des Wickels (32) anhand der Gewichtsmessung des abtropfenden Wickels bestimmt wird.

13. Verfahren nach einem der Ansprüche 6 bis 12,
**dadurch gekennzeichnet, dass**
als Füll- oder Tränkstoff (90) Vaseline, ein Wachs oder Wachsgel, eine Mischung aus Vaseline und hochschmelzenden Wachsen, eine Mischung aus Weißöl und Wachs oder eine Mischung aus Rizinusöl und Kalziumseife verwendet wird.

## Claims

1. Optical fibre coil (30) with a self-supporting winding (32) of an optical fibre line (10), wherein the winding (32) is formed as a cross-winding and the cross-winding has a plurality of layers (12) of the optical fibre line (10) lying one above the other as well as intersections (24) of the optical fibre line (10) of adjacent layers (12), wherein the intersections (24) have intersection areas (44) respectively with one geometric centre (46) each and layers (12) of the optical fibre line (10) lying one above the other are fixed to one another by a filler or impregnating material, **characterised by** that the winding (32) has at least in one central region (20), viewed in the coil longitudinal direction, an inner layer of inner intersections (58a) and over this a plurality of outer layers of outer intersections (58b to 58e), wherein the number of intersections (24) of the inner layer (58a) and the respective number of intersections (24) of the outer layers (58b to 58e) are identical, openings (70) are formed between four adjacent intersections (24) respectively, arranged in a diamond shape, of a layer of intersections (58a to 58e), wherein the openings (70) lie one above the other from the inside to the outside of the optical fibre coil (30) in such a way that channels are formed, and the geometric centre (46) of each of the intersection areas (44) of the outer intersections (24c to 24i) is intersected by a straight line (60) extending radially with respect to the coil longitudinal axis (18), which straight line runs through the intersection area (44) of an intersection (24) lying under the respective outer intersection (24c to 24i).

2. Optical fibre coil according to claim 1, **characterised by** that each of the intersections (24) has a contact area (48) within the intersection area (44) of the respective intersection (24) and the geometric centre (46) of each of the intersection areas (44) of the outer intersections (24c to 24i) is intersected by a straight line (60) extending radially with respect to the coil longitudinal axis (18), which straight line runs through the intersection area (44) of an intersection (24) lying under the respective outer intersection (24c to 24i) within the contact area (48).

3. Optical fibre coil according to claim 1 or 2, **characterised by** that each layer (12) of the optical fibre line (10) has turns (16) and the optical fibre line (10) is twisted in itself inside each of the turns (16).

4. Optical fibre coil according to one of the preceding claims, **characterised by** that the filler or impregnating material (90) has a phase transformation temperature that is above the maximum operating temperature of the optical fibre coil (30).

5. Optical fibre coil according to one of the preceding claims, **characterised by** that the filler or impregnating material (30) is Vaseline, a wax or wax gel, a mixture of Vaseline and high-melting waxes, a mixture of white oil and wax or a mixture of castor oil and calcium soap.

6. Method for the production of an optical fibre coil (30) with a self-supporting winding (32) of an optical fibre line (10), wherein the winding (32) is wound as a cross-winding, so that the winding (32) is formed from a plurality of layers (12) of the optical fibre line (10) lying one above the other and intersections (24) of the optical fibre line (10) of adjacent layers (12) are thereby produced, wherein the intersections (24) have intersection areas (44) respectively with one geometric centre (46) each and layers (12) of the optical fibre line (10) lying one above the other are fixed to one another by a filler or impregnating material, **characterised by** that the winding (32) has at least in one central region (20), viewed in the coil longitudinal direction, an inner layer of inner intersections (58a) and a plurality of outer layers of outer intersections (58b to 58e) is formed over this, so that the number of intersections (24) of the inner layer (58a) and the respective number of intersections (24) of the outer layers (58b to 58e) are identical, openings (70) form between four adjacent intersections (24) respectively, arranged in a diamond shape, of a layer of intersections (58a to 58e), wherein the openings (70) lie one above the other from the inside to the outside of the optical fibre coil (30) in such a way that channels are formed, and the geometric centre (46) of each of the intersection areas (44) of the outer intersections (24c to 24i) is intersected by a straight line (60) extending radially with respect to the coil longitudinal axis (18), which straight line runs through the intersection area (44) of an intersection (24) lying under the respective outer intersection (24c to 24i).

7. Method according to claim 6, **characterised by** that the layers (12) of the optical fibre line (10) are arranged such that each of the intersections (24) has a contact area (48) within the intersection area (44) of the respective intersection (24) and the geometric centre (46) of each of the intersection areas (44) of the outer intersections (24c to 24i) is intersected by a straight line (60) extending radially with respect to the coil longitudinal axis (18), which straight line runs through the intersection area (44) of an intersection (24) lying under the respective outer intersection (24c to 24i) within the contact area (48).

8. Method according to claim 6 or 7, **characterised by** that each layer (12) is wound through turns (16) and the optical fibre line (10) is twisted in itself on winding within each of the turns (16).

9. Method according to one of claims 6 to 8, **characterised by** that the optical fibre line (10) is exposed on winding to a tensile force and that the tensile force is reduced starting from the first layer (12) via each further layer (12) lying above it of the optical fibre line (10) and the tensile force is kept constant while winding one layer (10).

10. Method according to one of claims 6 to 9, **characterised by** that the filler or impregnating material (90) has a phase transformation temperature that is above the maximum operating temperature of the optical fibre coil.

11. Method according to one of claims 6 to 10, **characterised by** that the impregnation of the winding (32) is carried out in a vacuum or in an immersion bath.

12. Method according to one of claims 6 to 11, **characterised by** that the degree of impregnation of the winding (32) is determined with reference to the weight measurement of the dripping winding.

13. Method according to one of claims 6 to 12, **characterised by** that Vaseline, a wax or wax gel, a mixture of Vaseline and high-melting waxes, a mixture of white oil and wax or a mixture of castor oil and calcium soap is used as a filler or impregnating material (90).

## Revendications

1. Bobine de fibres de verre (30) dotée d'un enroulement autoporteur (32) d'une conduite en fibres de verre (10), l'enroulement (32) étant formé en tant que bobinage croisé et le bobinage croisé présentant plusieurs couches (12) superposées de la conduite en fibres de verre (10) ainsi que des croisements (24) de la conduite en fibres de verre (10) de couches (12) voisines, les croisements (24) présentant respectivement des surfaces de croisement (44) avec chacune un centre de gravité géométrique (46) et des couches (12) superposées de la conduite en fibres de verre (10) étant fixées les unes aux autres par une matière de remplissage ou un agent d'imprégnation (90),
**caractérisée en ce que**
l'enroulement (32) présente au moins dans une zone centrale (20), vu dans la direction longitudinale de la bobine, une couche intérieure de croisements intérieurs (58a) et au-dessus plusieurs couches extérieures de croisements extérieurs (58b à 58e), le nombre de croisements (24) de la couche intérieure (58a) et le nombre respectif de croisements (24) des couches extérieures (58b à 58e) étant égaux, des ouvertures (70) étant formées entre respectivement quatre croisements (24) voisins disposés en forme de losange d'une couche de croisements (58a à 58e), les ouvertures (70) étant superposées de l'intérieur à l'extérieur de la bobine de fibres de verre (30) de telle sorte que des canaux se forment, et le centre de gravité géométrique (46) de chacune des surfaces de croisement (44) des croisements extérieurs (24c à 24i) étant coupé par une droite (60) s'étendant de manière radiale par rapport à l'axe longitudinal de la bobine (18), qui passe à travers la surface de croisement (44) d'un croisement (24) situé sous le croisement extérieur (24c à 24i) respectif.

2. Bobine de fibres de verre selon la revendication 1,
**caractérisée en ce que**
chacun des croisements (24) présente une surface de contact (48) dans la surface de croisement (44) du croisement (24) respectif et le centre de gravité géométrique (46) de chacune des surfaces de croisement (44) des croisements extérieurs (24c à 24i) est coupé par une droite (60) s'étendant de manière radiale par rapport à l'axe longitudinal de la bobine (18), qui passe à travers la surface de croisement (44) d'un croisement (24) situé sous le croisement extérieur (24c à 24i) respectif dans la surface de contact (48).

3. Bobine de fibres de verre selon la revendication 1 ou 2,
**caractérisée en ce que**
chaque couche (12) de la conduite en fibres de verre (10) présente des spires (16) et la conduite en fibres de verre (10) est tournée sur elle-même dans chacune des spires (16).

4. Bobine de fibres de verre selon l'une des revendications précédentes,
**caractérisée en ce que**
la matière de remplissage ou l'agent d'imprégnation (90) présente une température de transition de phase qui est au-dessus de la température de service maximale de la bobine de fibres de verre (30).

5. Bobine de fibres de verre selon l'une des revendications précédentes,
**caractérisée en ce que**
la matière de remplissage ou l'agent d'imprégnation (30) est de la vaseline, une cire ou un gel de cire, un mélange de vaseline et de cires à haut point de fusion, un mélange d'huile blanche et de cire ou un mélange d'huile de ricin et de savon de calcium.

6. Procédé de fabrication d'une bobine de fibres de verre (30) dotée d'un enroulement autoporteur (32) d'une conduite en fibres de verre (10), l'enroulement (32) étant enroulé en tant que bobinage croisé, de sorte que l'enroulement (32) est formé à partir de plusieurs couches (12) superposées de la conduite en fibres de verre (10) et que des croisements (24) de la conduite en fibres de verre (10) de couches (12) voisines sont ainsi générés, les croisements (24) présentant respectivement des surfaces de croisement (44) avec chacune un centre de gravité géométrique (46) et des couches (12) superposées de la conduite en fibres de verre (10) étant fixées les unes aux autres par une matière de remplissage ou un agent d'imprégnation (90),
**caractérisé en ce que**
l'enroulement (32) au moins dans une zone centrale (20), vu dans la direction longitudinale de la bobine, une couche intérieure de croisements intérieurs (58a) et au-dessus plusieurs couches extérieures de croisements extérieurs (58b à 58e) sont formées, de sorte que le nombre de croisements (24) de la couche intérieure (58a) et le nombre respectif de croisements (24) des couches extérieures (58b à 58e) sont égaux, des ouvertures (70) se forment entre respectivement quatre croisements (24) voisins disposés en forme de losange d'une couche de croisements (58a à 58e), les ouvertures (70) étant superposées de l'intérieur à l'extérieur de la bobine de fibres de verre (30) de telle sorte que des canaux se forment, et le centre de gravité géométrique (46) de chacune des surfaces de croisement (44) des croisements extérieurs (24c à 24i) étant coupé par une droite (60) s'étendant de manière radiale par rapport à l'axe longitudinal de la bobine, qui passe à travers la surface de croisement (44) d'un croisement (24) situé sous le croisement extérieur (24c à 24i) respectif.

7. Procédé selon la revendication 6,
**caractérisé en ce que**
les couches (12) de la conduite en fibres de verre (10) sont disposées de telle sorte que chacun des croisements (24) présente une surface de contact (48) dans la surface de croisement (44) du croisement (24) respectif et le centre de gravité géométrique (46) de chacune des surfaces de croisement (44) des croisements extérieurs (24c à 24i) est coupé par une droite (60) s'étendant de manière radiale par rapport à l'axe longitudinal de la bobine, qui passe à travers la surface de croisement (44) d'un croisement (24) situé sous le croisement extérieur (24c à 24i) respectif dans la surface de contact (48).

8. Procédé selon la revendication 6 ou 7,
**caractérisé en ce que**
chaque couche (12) est enroulée par des spires (16) et la conduite en fibres de verre (10) est tournée sur elle-même lors de l'enroulement dans chacune des spires (16).

9. Procédé selon l'une des revendications 6 à 8,
**caractérisé en ce que**
la conduite en fibres de verre (10) est soumise à une force de traction lors de l'enroulement et **en ce que** la force de traction est réduite en partant de la première couche (12) sur chaque autre couche (12) superposée de la conduite en fibres de verre (10) et la force de traction est maintenue constante pendant l'enroulement d'une couche (10).

10. Procédé selon l'une des revendications 6 à 9,
**caractérisé en ce que**
la matière de remplissage ou l'agent d'imprégnation (90) présente une température de transition de phase qui est au-dessus de la température de service maximale de la bobine de fibres de verre.

11. Procédé selon l'une des revendications 6 à 10,
**caractérisé en ce que**
l'imprégnation de l'enroulement (32) est effectuée sous vide ou dans un bain de trempage.

12. Procédé selon l'une des revendications 6 à 11,
**caractérisé en ce que**
le degré d'imprégnation de l'enroulement (32) est déterminé à l'aide de la mesure du poids de l'enroulement s'égouttant.

13. Procédé selon l'une des revendications 6 à 12,
**caractérisé en ce qu'**
en tant que matière de remplissage ou d'agent d'imprégnation (90), on utilise de la vaseline, une cire ou un gel de cire, un mélange de vaseline et de cires à haut point de fusion, un mélange d'huile blanche et de cire ou un mélange d'huile de ricin et de savon de calcium.
